# EUROPÄISCHE PATENTSCHRIFT

(11) **EP 1 030 987 B1**
(45) Veröffentlichungstag und Bekanntmachung des Hinweises auf die Patenterteilung: **02.05.2002**
(21) Anmeldenummer: 98955559.4
(22) Anmeldetag: 10.11.1998
(51) Int. Cl.: F16K 1/30

(54) **RESTDRUCKVENTIL**
RESIDUAL PRESSURE VALVE
SOUPAPE DE PRESSION RESIDUELLE

(30) Priorität: 21.11.1997 DE 19751678
(43) Veröffentlichungstag der Anmeldung: 30.08.2000
(73) Patentinhaber: MESSER GRIESHEIM GMBH, 60547 Frankfurt (DE)
(72) Erfinder: PONGRAZ, Johann, D-47259 Duisburg (DE); KLEBE, Ulrich, D-47647 Kerken (DE)
(86) Internationale Anmeldenummer: EP9807158
(87) Internationale Veröffentlichungsnummer: WO9927282

(56) Entgegenhaltungen:
- EP-A- 0 708 281
- WO-A-96/05460
- DE-A- 4 214 544
- GB-A- 1 022 522

## Beschreibung

Die Erfindung betrifft ein Ventil mit integrierter Restdruckeinrichtung, enthaltend ein Schließelement, das durch eine Druckfeder auf den Ventilsitz gedrückt wird und mittels eines mit dem Schließelement nicht fest verbundenen Betätigungselements in absperrende Stellung gebracht werden kann.

Druckgasbehälter sollen in der Regel nicht komplett entleert werden, sondern mit einem Restdruck von 2 - 3 bar Überdruck zurückgegeben werden. Dieser Restdruck sorgt dafür, daß die innere Oberflächenbehandlung der Druckgasbehälter konserviert wird und keine Atmosphäre eindringen kann.

Besonders bei hochreinen Gasen wird mit hohem technischem Aufwand die Innenoberfläche über gezielte Behandlungsverfahren konditioniert, um Gase der Reinheit 6.0 oder stabile Prüfgase speichern zu können.

Oft werden Druckgasflaschen komplett entleert (1 bar absolut) und die Flaschenventile nicht geschlossen. Die Folge ist, daß die Oberflächenbehandlung und Konditionierung durch Eindringen von Luft zerstört wird. Die Druckgasflasche ist nicht wiederbefüllbar, sondern muß erneut einer grundlegenden Behandlung unterzogen werden. Hierdurch entstehen unnötige Kosten.

Aus diesen und aus sicherheitstechnischen Gründen werden im Bereich der technischen Gase bereits Restdruckventile mit Rückströmverhinderung eingesetzt.

EP 0 077 828-B1 beschreibt ein Ventil mit druckabhängiger Schließvorrichtung (Restdruckventil), die örtlich und funktionell von dem im Ventil enthaltenen Absperrventil getrennt ist.

GB-A-1 022 522 beschreibt ein Ventil mit integriertem Restdruckventil, wobei das Handrad über ein Gewindeteil auf das Schließelement wirkt. Gewindeteil und Schließelement sind getrennte Teile. Für die Befüllung einer Druckgasflasche mit dem Ventil, muß zur Öffnung des Restdruckventiles ein Schraubteil am Kopf des Ventiles entfernt werden.

DE 42 14 544 A1 betrifft ein Verschluß- und Füllventil für Behältnisse mit einem unter Druck stehenden Medium, insbesondere für Kältemittelflaschen. Es wird ein Ventil beschrieben, dessen Verschlußkörper ein im Ventilgehäuse druckdicht geführter und mittels einer Schließfeder vorgespannter Kolben ist.

Bei diesen Ventilen handelt es sich in der Regel um O-Ring Ventile mit komplizierten inneren Funktionsgeometrien. Solche Ventile sind für den Einsatz im Reinstgasebereich nicht geeignet.

Hierfür gibt es mehrere Gründe:
- unzureichender Leitwert für die Flaschenkonitionierung,
- schlecht spürbare und damit kontaminationsträchtige innere Funktionsgeometrien,
- eine vielzahl federbelastete mechanische Funktionsbauteile (führt zur Partikelerzeugung).

Der Erfindung liegt die Aufgabe zugrunde, ein Absperrventil mit integriertem Restdruckventil bereitszustellen, das für Reinstgasanwendungen geeignet ist.

Gelöst wurde die Aufgabe durch ein Ventil mit den in Anspruch 1 beschriebenen Merkmalen.

Das Schließelement, das durch eine Druckfeder auf den Ventilsitz gedrückt wird, wirkt als Restdruckventil. Restdruckventile schließen bei Unterschreiten eines bestimmten Flaschendrucks ( z. B. 2 - 3 bar) durch mechanische Elemente selbsttätig den Gasraum einer Druckgasflasche. Hierbei muß das Handrad nicht betätigt werden, d.h. das Ventil ist in jedem Fall geschlossen - auch wenn vergessen wurde, es zu schließen. Die oben beschriebenen Probleme, insbesondere die Verunreinigung von entleerten Druckgasflaschen, werden somit vermieden.

Das Funktions- und Konstruktionsprinzip ist in der Regel bei allen Ventiltypen einsetzbar. Besonders vorteilhaft ist der Einsatz bei Absperrelementen mit Membranventil oder Stopfbuchsventil. Insbesondere ist das Ventil gemäß der Erfindung bei Reinstgasen von großem Vorteil.

Vorzugsweise ist die Restdruckeinrichtung des Ventils in den nicht gasberührten Raum des Ventils verlagert. Zum Beispiel ist die Restdruckeinrichtung bei Membranventilen oberhalb der Membran und im Bereich der Oberspindel angeordnet. Durch Modifikation der Oberspindel und des Betätigungselementes (Handrad) kann die Restdruckeinrichtung in der Regel in gängige Ventile eingebaut werden. Die Herstellung der Ventile gemäß der Erfindung ist daher sehr wirtschaftlich, da auf vorhandene Ventilteile (z. B. Ventilgrundkörper) zurückgegriffen werden kann.

Die Druckfeder der Restdruckeinrichtung ist vorteihaft in der Kopfschraube angeordnet und übt eine axiale Kraft auf den Ventilsitz aus.

Die Ventilspindel (Oberspindel bei Membranventilen) ist vorzugsweise ohne Spindelgewinde und in der Kopfschraube verschiebbar. Die Kopfschraube enthält vorzugsweise ein Gewinde (z. B. Innengewinde), in dem ein Teil des Betätigungselementes mit passendem Gewinde geführt wird. Über dieses Gewinde wird eine Drehung des Betätigungselementes (Handrad) in einen Aufoder Ab-Hub umgesetzt. In geschlossener Stellung des Ventiles drückt das Betätigungselement auf das Schließelement (Ventilspindel) und fixiert so das Schließelement dichtend auf dem Ventilsitz. Der Gasweg ist damit gesperrt.

Bei einem Membranventil wird beim Schließen des Ventils die Oberspindel über das Betätigungsgewinde in Form einer Hubbewegung nach unten gefahren. Die Unterspindel wird auf den Ventilsitz gepreßt.

Öffnet man das Ventil (Drehung des Handrades zur Öffnung), so wird das achsial bewegliche Schließelement nicht mehr mechanisch fixiert und kann die Restdruckregelung ausführen. Die Feder übt eine zum Ventilsitz gerichtete Kraft in Schließrichtung aus. Dieser Kraft steht die Druckkraft des Gasdruckes des Druckgasbehälters entgegen und öffnet das Schließelement gegen die Federkraft. Der Hub ist beispielsweise durch eine Kante in der Kopfschraube begrenzt.

Mit zunehmender Entleerung sinkt die Druckkraft des Gases. Die Federkraft ist so ausgelegt (z. B. durch die Federkraft der verwendeten Druckfeder fest vorgegeben), daß sie bei Erreichen bzw. Unterschreiten des Gasdrucks im Druckgasgehälter von z. B. 2 - 3 bar überwiegt und das Schließelement schließt. Auf diese Weise ist ein Restdruck in dem Druckgasbehälter gewährleistet und das Ventil geschlossen. Gas aus der Atmosphäre kann nicht in den Druckgasbehälter eindringen.

Im Füllwerk ist es zur Druckentlastung und Evakurierung erforderlich, die Restdruckeinrichtung zu überbrücken. Daher kann die Entkoppelung von Betätigungselement (Handrad) und Schließelement in einer bevorzugten Ausführung des Ventils durch einen besonderen Mechanismus überbrückt werden. Das Schließelement kann beispielsweise eine Verlängerung mit einem Mitnehmer (z. B. Anschlag) am oberen Ende aufweisen, wobei die Verlängerung (z. B. zylindrischer Stift) vorteilhaft durch eine zentrale Öffnung im Betätigungselement geführt wird und der Mitnehmer erst bei Drehung des Betätigungselementes über die Verschlußstellung hinaus am Betätigungselement greift und das Schließelement gegen die Druckfederkraft mechanisch geöffnet wird. Vorteilhaft besitzt das Ventil in der Kopfschraube einen definierten Anschlag der ein weiteres Hochziehen des Schließelementes gegen die Druckfederkraft verhindert. Die Überbrückung der Restdruckregelung ist bei normaler Öffnung des Ventils nicht wirksam. Die Überbrückung der Restdruckregelung des Ventils dient zur Gasbefüllung des Druckgasbehälters über das Ventil. Die Überbrückungseinrichtung der Restdruckregelung ist vorzugsweise so gestaltet, daß die Überbrückungsfunktion für Unbefugte nicht betätigt werden kann, z. B. durch eine eingebaute Sperre oder Sicherung, die nur vom Gaseabfüller entfernt werden kann.

Nach dem Füllvorgang und Schließen des Ventils wird die Restdruckregelung wieder aktiviert und in Funktion gesetzt. Die Überbrückungseinrichtung ist wieder gesperrt.

Die Überbrückungseinrichtung ist beispielsweise durch geeignete Kodierungsmaßnahmen vor Manipulation durch den Anwender/Kunden entsprechend gesichert und kann nur vom Füllpersonal mit geeigneten Mitteln aufgehoben werden.

Das Ventil gemäß der Erfindung bietet folgende Vorteile:
- Innere Funktionsgeometrie mit der gleichen Kontaminationsarmut wie bei klassischen Reinstgasventilen,
- Schutz der hochwertigen Druckgasbehälterinnenvorbehandlung führt zu Kosten-ersparnis,
- Sicherheit, daß die Innenvorbehandlung der Druckgasbehälter über die Umlaufzyklen konserviert bleibt (Ersparnis von Überprüfungen),
- Schutz vor Kontamination der Druckgasbehälter bei normalem Handling,
- definiertes Entlasten der Restinhalte für innerbetriebliche Abläufe,
- bestehende Ventiltechnologie kann relativ preiswert umgerüstet bzw. modifiziert werden,
- Funktionsprinzip auf andere Ventiltypen übertragbar.

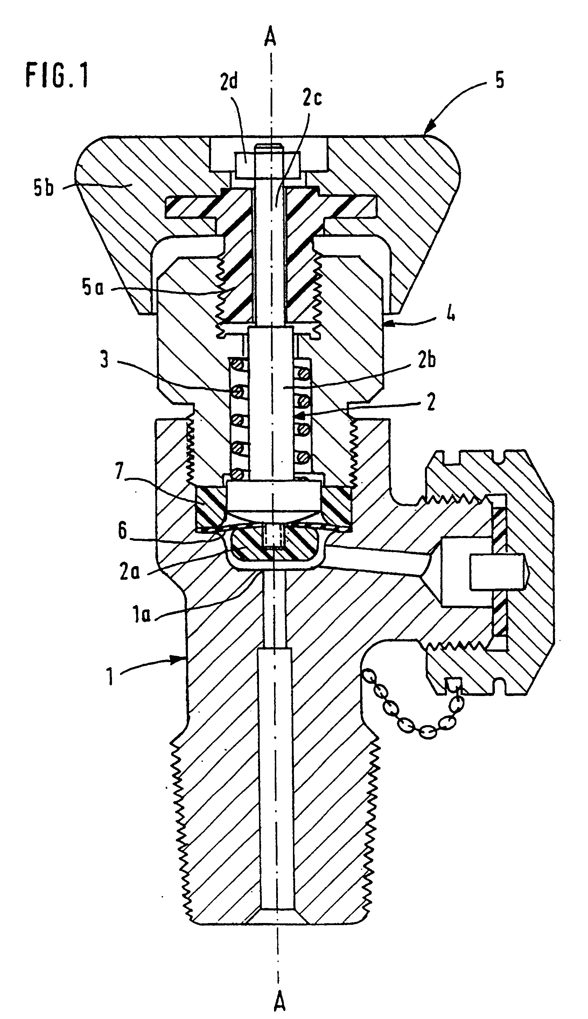

Fig. 1 zeigt ein erfindungsgemäßes Ventil am Beispiel eines Membranventiles (Längsschnitt entlang Achse A-A). Der Ventilgrundkörper 1 enthält die Gaskanäle, den Ventilsitz 1a, eine Öffnung mit Innengewinde zur Aufnahme der Kopfschraube 4 und der Funktionsteile Schließelement 2, Druckfeder 3, Membran 6 und Dichtung 7. Das Betätigungselement 5, bestehend aus Gewindeteil 5a und damit verbundenem Handrad 5b, in einem Gewinde der zentralen Öffnung der Kopfschraube 4 geführt. Drehung des Betätigungselementes führt zu einer Auf- oder Abbewegung je nach Drehrichtung. In der Kopfschraube 4 untergebrachte Druckfeder mit dem mittleren Schaft 2b des Schließelementes 2 (Teil der Oberspindel) bildet im wesentlichen die Restdruckregelung. Die Öffnung des Schließelementes 2 ist durch eine als Anschlag dienende Verengung der zentralen Öffnung der Kopfschraube 4 begrenzt (Anschlag des Kopfes der Oberspindel an der Kante der Verengung). Zwischen Kopf der Oberspindel und der Unterspindel 2a ist die Ventilmembran 6 angeordnet. Die Unterseite der Unterspindel 2a, vorzugsweise mit Dichtelement ausgestattet, dichtet gegen den Ventilsitz 1a in geschlossener Stellung ab. Das Schließelement besitzt kein Gewinde zur Kraftübertragung in eine Auf- oder Ab-Bewegung und ist dem Betätigungselement 5 nicht gekoppelt. Trotzdem bilden Schließelement und Druckregelung eine Einheit. Zum Schließen des Ventiles (Absenken des Schließelementes 2) greift das Gewindeteil 5a ab einer bestimmten Position an dem Schaft des Schließelementes 2 (Kante am Übergang von mittlerem Schaft 2b zu schmälerer Verlängerung 2c) an. Bei fortgesetzter schließender Drehung des Handrades 5b wird somit das Schließelement 2 gegen den Ventilsitz 1a gedrückt. Die Verländerung 2c des Schließelementes 2 trägt am Ende einen Mitnehmer 2d (z. B. Vierkant), der bei Drehung des Betätigungselementes über die normale Öffnungsstellung hinaus in eine entsprechende Aussparung im Handrad 5b bewegt wird. Damit wird die Entkoppelung von Betätigungselement 5 und Schließelement 2 überbrückt. Durch die Überbrückung kann das Schließelement 2 über das Handrad 5b gehoben und das Ventil gegen die Rückstellkraft der Druckfeder 3 geöffnet werden. Die Restdruckeinrichtung ist dann außer Funktion. Die Ventilöffnung ist erforderlich z. B. für die Befüllung des Druckgasbehälters.

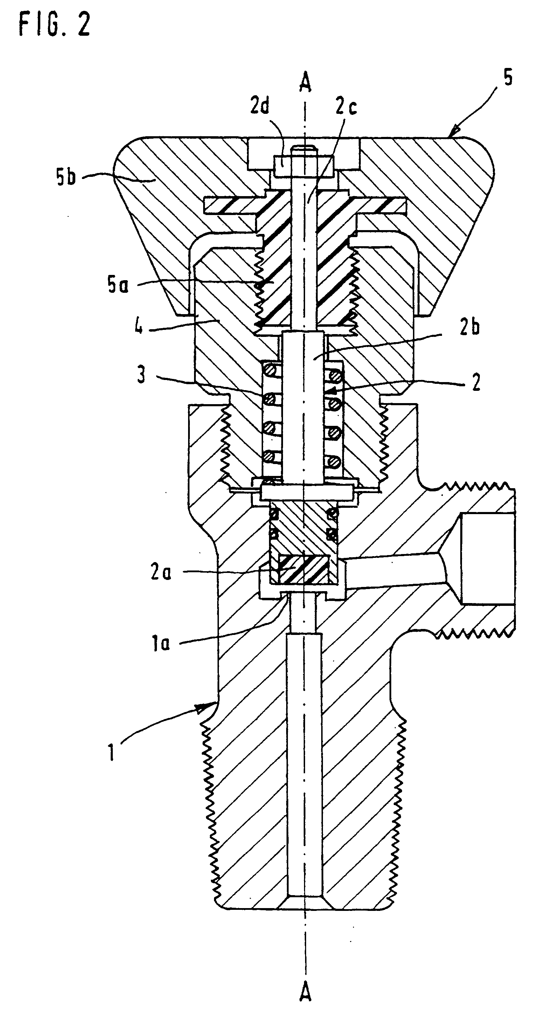

Fig. 2 zeigt ein erfindungsgemäßes Ventil am Beispiel eines Stopfbuchsventiles (Längsschnitt entlang Achse A-A) mit analogem Aufbau zu Fig. 1. Der Ventilgrundkörper 1 enthält die Gaskanäle, den Ventilsitz 1a, eine Öffnung mit Innengewinde zur Aufnahme der Kopfschraube 4 und die Funktionsteile Schließelement 2 und Druckfeder 3. Schließelement 2 und Betätigungselement 5 sind ohne direkte Verbindung. In geöffneter Stellung des Ventiles ist die Restdruckregeleinrichtung mit Druckfeder 3 und Schließelement 2 wirksam. Der Kopf 2a der Ventilspindel drückt gegen den Ventilsitz 1a. Übersteigt die Kraft des anliegenden Gasdruckes die Federkraft der Druckfeder 3, so wird das Schließelement angehoben und Gas kann entweichen. Bei geschlossener Ventilstellung drückt das Betätigungselement 5 mit dem Gewindeteil 5a auf das Schließelement 2, wodurch der Kopf 2a der Ventilspindel gegen den Ventilsitz 1a gedrückt und das Ventil geschlossen wird. In der Regel ist der Kopf 2a an der dichtenden Seite mit einer Dichtung (z. B. Dichtring aus Elastomer) ausgestattet.

## Patentansprüche

1. Ventil mit integrierter Restdruckeinrichtung, enthaltend ein Schließelement (2), das durch eine Druckfeder (3) auf den Ventilsitz (1a) gedrücht wird und mittels eines mit dem Schließelement (2) nicht fest verbundenen Betätigungselements (5) in absperrende Stellung gebracht werden kann, **dadurch gekennzeichnet, daß** das Ventil eine Oberbrückungseinrichtung zur Herstellung einer direkten Kopplung zwischen Schließelement (2) und Betätigungselement (5) enthält.

2. Ventil nach Anspruch 1, **dadurch gekennzeichnet, daß** die Druckfeder (3) in der Kopfschraube (4) des Ventiles angeordnet ist.

3. Ventil nach Anspruch 1 oder 2, **dadurch gekennzeichnet, daß** die Restdruckeinrichtung des Ventils im nicht gasberührten Raum des Ventils angeordnet ist

4. Ventil nach einem der Ansprüche 1. bis 3,
**dadurch gekennzeichnet, daß** das Schließelement (2) eine Verlängerung mit einem Mitnehmer am oberen Ende aufweist, wobei die Verlängerung (2c) durch eine zentrale Öffnung im Betätigungselement (5) geführt wird und der Mitnehmer (2d) erst bei Drehung des Betätigungselementes (5) über die Verschlußstellung hinaus am Betätigungselement (5) greift und das Schließelement (2) gegen die Kraft der Druckfeder (3) mechanisch geöffnet wird.

5. Ventil nach einem der Ansprüche 1 bis 4, **dadurch gekennzeichnet, daß** das Ventil in der Kopfschraube (4) einen definierten Anschlag besitzt, der ein weiteres Hochziehen des Schließelementes (2) gegen die Kraft der Druckfeder (3) verhindert.

6. Ventil nach einem der Ansprüche 1 bis 5, **dadurch gekennzeichnet, daß** das Ventil vom Typ eines Membranventiles, eines Faltenbalgventiles oder eines Stopfbuchsventiles ist.

7. Druckgasbehälter mit einem Ventil nach einem der Ansprüche 1 bis 6.

8. Verwendung eines Ventils gemäß einem der Ansprüche 1 bis 6 als Absperrventil für Druckgasbehälter.

9. Verwendung eines Ventils gemäß einem der Ansprüche 1 bis 6 für Reinstgase.

## Claims

1. Valve with integrated residual pressure device, containing a closing element (2) which is pressed onto the valve seat (la) by a compression spring (3) and can be moved into a shutting-off position by means of an actuating element (5) which is not fixedly connected to the closing element (2), **characterized in that** the valve contains a bridging device for producing a direct coupling between the closing element (2) and actuating element (5).

2. Valve according to Claim 1, **characterized in that** the compression spring (3) is arranged in the cap screw (4) of the valve.

3. Valve according to Claim 1 or 2, **characterized in that** the residual pressure device of the valve is arranged in the valve space which is not in contact with gas.

4. Valve according to one of Claims 1 to 3, **characterized in that** the closing element (2) has an extension with a carry-along element at the top end, the extension (2c) being routed through a central opening in the actuating element (5), and the carry-along element (2d) only acting on the actuating element (5) when the actuating element (5) is rotated beyond the closure position, and the closing element (2) being opened mechanically counter to the force of the compression spring (3).

5. Valve according to one of Claims 1 to 4, **characterized in that** the valve, in the cap screw (4), has a defined stop which prevents the closing element (2) from being drawn up further counter to the force of the compression spring (3).

6. Valve according to one of Claims 1 to 5, **characterized in that** the valve is of the type covered by a diaphragm valve, a bellows-type valve, or a packed valve.

7. Compressed gas cylinder with a valve according to one of Claims 1 to 6.

8. Use of a valve, according to one of Claims 1 to 6 as a shut-off valve for compressed gas cylinders.

9. Use of a valve according to one of Claims 1 to 6 for high-purity gases.

## Revendications

1. Vanne avec une installation de pression résiduelle, intégrée, comportant un élément d'obturation (2) pressé par un ressort de compression (3) contre le siège de soupape (1a) et qui est mis en position de fermeture par un élément d'actionnement (5) relié non solidairement à l'élément d'obturation (2),
**caractérisée en ce que**
la vanne comporte une installation de contournement pour réaliser un couplage direct entre l'élément d'obturation (2) et l'élément d'actionnement (5).

2. Vanne avec une installation de pression résiduelle selon la revendication 1,
**caractérisée en ce que**
le ressort de compression (3) est logé dans la vis de tête (4) de la vanne.

3. Vanne avec une installation de pression résiduelle selon les revendications 1 ou 2,
**caractérisée en ce que**
l'installation de pression résiduelle de la vanne est prévue dans le volume de la vanne non en contact avec le gaz.

4. Vanne avec une installation de pression résiduelle selon l'une des revendications 1 à 3,
**caractérisée en ce que**
l'élément d'obturation (2) comporte un prolongement avec un organe d'entraînement à son extrémité supérieure, le prolongement (2c) étant guidé dans une ouverture centrale de l'élément d'actionnement (5) et l'organe d'entraînement (2d) n'est pris que si l'on fait tourner l'élément d'actionnement (5) au-delà de la position de fermeture en agissant sur l'élément d'actionnement (5) et en ouvrant mécaniquement l'élément d'obturation (2), mécaniquement contre la force du ressort de compression.

5. Vanne avec une installation de pression résiduelle selon l'une des revendications 1 à 4,
**caractérisée en ce qu'**
elle comporte une butée définie dans la vis de tête (4) qui évite la poursuite du relevage par traction de l'élément d'obturation (2) contre la force du ressort de compression (3).

6. Vanne avec une installation de pression résiduelle selon l'une des revendications 1 à 5,
**caractérisée en ce qu'**
il s'agit d'une vanne à membrane, d'une vanne à soufflet ou d'une vanne à presse-étoupe.

7. Réservoir à gaz comprimé comportant une vanne selon l'une des revendications 1 à 6.

8. Application d'une vanne selon l'une des revendications 1 à 6 comme vanne d'arrêt pour des réservoirs à gaz comprimé.

9. Application d'une vanne selon l'une des revendications 1 à 6 pour des gaz extremement purs.
